# EUROPÄISCHE PATENTANMELDUNG

(11) **EP 1 167 121 A2**
(43) Veröffentlichungstag der Anmeldung: **02.01.2002**
(21) Anmeldenummer: 01114545.5
(22) Anmeldetag: 16.06.2001
(51) Int. Cl.: B60Q 11/00

(54) **Überwachungseinrichtung einer Steuerung, vorzugsweise für Signalleuchten von Fahrzeugen, insbesondere von Kraftfahrzeugen**

(30) Priorität: 23.06.2000 DE 20011115 U
(71) Anmelder: REITTER & SCHEFENACKER GmbH & Co. KG, D-73730 Esslingen (DE)
(72) Erfinder: Diez, Werner, 72649 Wolfschlugen (DE)
(74) Vertreter: Kohl, Karl-Heinz

(57) **Zusammenfassung**

Bei der Überwachungseinrichtung weist die Signalleuchte ein Schlußlicht (SL) und ein Bremslicht (BR) auf, die jeweils mit einem Leuchtenelement versehen sind, das an jeweils einen Signaleingang angeschlossen ist. Damit sich bei der Überwachungseinrichtung eine Störung im Stromkreis zur Signalleuchte nicht sicherheitsgefährdend auswirkt, ist die Überwachungseinrichtung mit einem elektronischen Schalter (T1) versehen, mit dem ein Notpfad (19) zum Schlußlicht (SL) und/oder zum Bremslicht (BR) bei Störung der Steuerung (4) freischaltbar ist. Diese Freischaltung des Notpfades (19) erfolgt automatisch, so daß unabhängig davon, ob der Fahrer des Fahrzeuges die Störung bemerkt, die Signalleuchte ordnungsgemäß arbeitet. Die Überwachungseinrichtung eignet sich zur Überwachung einer Steuerung, mit der beispielsweise Heckleuchten in Kraftfahrzeugen gesteuert werden. Die Einrichtung kann aber auch für die Überwachung jeder anderen Steuerung verwendet werden.

## Beschreibung

Die Erfindung betrifft eine Überwachungseinrichtung einer Steuerung, vorzugsweise für Signalleuchten von Fahrzeugen, insbesondere von Kraftfahrzeugen, nach dem Oberbegriff des Anspruches 1.

Es sind Signalleuchten in Form von Heckleuchten von Kraftfahrzeugen bekannt, die ein Schlußlicht, ein Bremslicht, ein Blinklicht und ein Nebelschlußlicht enthalten. Tritt im Steuerungskreis zur Signalleuchte ein Fehler auf und fallen dementsprechend eine oder mehrere der Funktionsleuchten aus, besteht ein erhebliches Sicherheitsrisiko im Straßenverkehr, insbesondere weil der Fahrer des Kraftfahrzeuges die Störung nicht bemerkt.

Der Erfindung liegt die Aufgabe zugrunde, die gattungsgemäße Überwachungseinrichtung so auszubilden, daß eine Störung im Stromkreis zur Signalleuchte sich nicht sicherheitsgefährdend auswirkt.

Diese Aufgabe wird bei der gattungsgemäßen Überwachungseinrichtung erfindungsgemäß mit den kennzeichnenden Merkmalen des Anspruches 1 gelöst.

Tritt bei der erfindungsgemäßen Überwachungseinrichtung im Steuer- bzw. Stromkreis zur Signalleuchte eine Störung auf, dann wird über den elektronischen Schalter der Notpfad zum Schlußlicht und/oder zum Bremslicht freigegeben, so daß über diesen Notpfad das Schlußlicht und/oder das Bremslicht mit dem notwendigen Strom versorgt wird. Die Freischaltung des Notpfades erfolgt automatisch, so daß unabhängig davon, ob der Fahrer des Fahrzeuges die Störung bemerkt, die Signalleuchte ordnungsgemäß arbeitet.

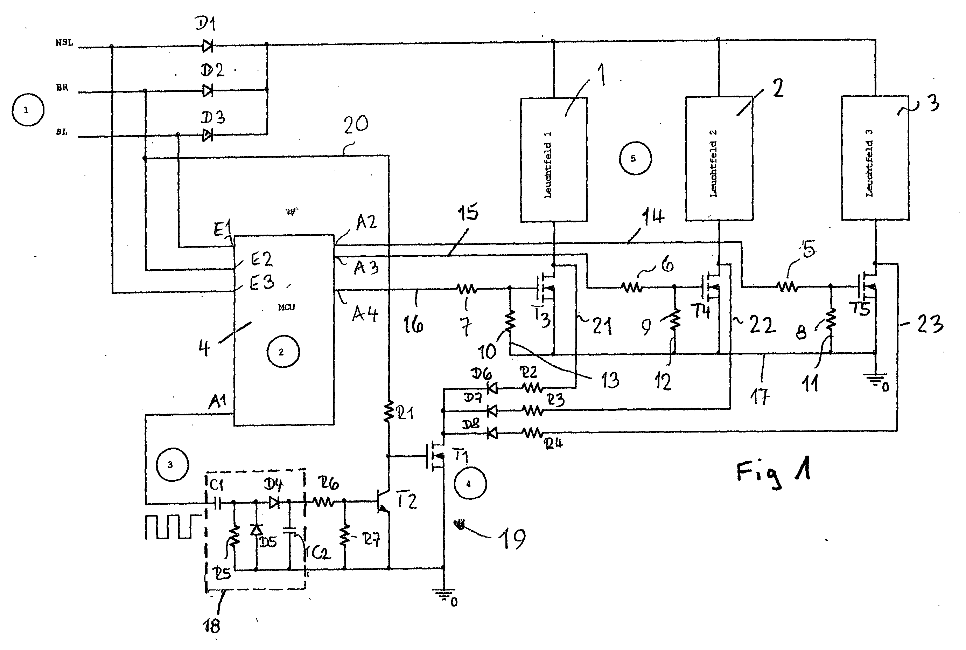

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt ein Schaltbild der erfindungsgemäßen Überwachungseinrichtung, mit der eine Steuerung überwacht wird, die im Ausführungsbeispiel die Heckleuchte eines Kraftfahrzeuges steuert. Die Einrichtung kann aber auch für die Überwachung jeder anderen Steuerung eingesetzt werden.

Im Ausführungsbeispiel hat die Heckleuchte drei Leuchtfelder 1 bis 3, von denen das Leuchtfeld 1 eine Nebelschlußleuchte, das Leuchtfeld eine Bremsleuchte und das Leuchtfeld 3 eine Schlußleuchte ist. Die Leuchtfelder 1 bis 3 können jeweils wenigstens eine Glühlampe aufweisen. Vorteilhaft sind alle drei Leuchtfelder 1 bis 3 durch LEDs gebildet. Die Überwachungseinrichtung hat die Signaleingänge NSL, BR und SL, über welche die jeweiligen Leuchtfelder 1 bis 3 die notwendigen Signale erhalten. Jedem Signaleingang ist eine Diode D1 bis D3 nachgeschaltet. Die Dioden D1 bis D3 liegen parallel zueinander. Im Strompfad von den Signaleingängen NSL, BR, SL zu den Leuchtfeldern 1 bis 3 liegt eine Steuereinheit 4, die durch einen Mikrocontroller mit einem Steuerungsprogramm gebildet wird. Die Steuereinheit 4 hat Eingänge E1 bis E3. An den Eingang E1 ist der Signaleingang SL für das Schlußlicht, an den Eingang E2 der Signaleingang BR für das Bremslicht und an den Eingang E3 der Signaleingang NSL für das Nebelschlußlicht angeschlossen. Die Steuereinheit 4 ist außerdem mit Ausgängen A2 bis A4 versehen, an welche in noch zu beschreibender Weise über Halbleiterschalter T3 bis T5 die Leuchtfelder 1 bis 3 angeschlossen sind. Zwischen dem Signalausgang A2 und dem zugehörigen Halbleiterschalter T5 liegt im Strompfad 14 ein Widerstand 5, zwischen dem Signalausgang A3 und dem zugehörigen Halbleiterschalter T4 im Strompfad 15 ein Widerstand 6 und zwischen dem Signalausgang A4 und dem zugehörigen Halbleiterschalter T3 im Strompfad 16 ein Widerstand 7.

Die Steuereinheit 4 ist mit einem weiteren Signalausgang A1 versehen, über den ein Wechselsignal zum Abschalten eines noch zu beschreibenden Notpfades 19 abgegeben wird. Zu den Widerständen 5 bis 7 ist jeweils ein Widerstand 8 bis 10 in Serie geschaltet, die ihrerseits parallel zueinander liegen. Die Widerstände 8 bis 10 liegen jeweils in einem Strompfad 11 bis 13, die die Strompfade 14 bis 16 zwischen den Ausgängen A2 bis A4 und den zugehörigen Halbleiterschaltern T3 bis T5 mit einem Strompfad 17 verbinden.

An den Signalausgang A1 der Steuereinheit 4 ist ein Gleichrichter 18 angeschlossen, der im Notpfad 19 der Überwachungseinrichtung liegt. Durch diesen Notpfad 19 wird sichergestellt, daß bei einer Störung in der Steuerung 4 und/oder im Steuerkreis von den Signaleingängen NSL, BR, SL zu den Leuchtfeldern 1 bis 3 die Funktion des Schlußlichtes SL und/oder des Bremslichtes BR sichergestellt ist. Der Gleichrichter 18 erzeugt aus einem am Signalausgang A1 anliegenden Wechselspannungssignal eine Gleichspannung, die einen Transistor T2 im Notpfad 19 öffnet und den Strom durch einen in Serie zum Transistor T2 liegenden Widerstand R1 treibt. Der Gleichrichter 18 hat einen Kondensator C1, eine Diode D4 und einen Widerstand R6, die in Serie zueinander und zum Transistor T2 geschaltet sind. Außerdem ist der Gleichrichter 18 mit einem Widerstand R5, einer Diode D5, einem Kondensator C2 und einem Widerstand R7 versehen, die parallel zueinander und zum Transistor T2 geschaltet sind.

Dem Transistor T2 nachgeschaltet ist ein Halbleiterschalter T1, der ebenfalls im Notpfad 19 liegt. Er ist ferner mit den Dioden D6 bis D8 sowie den jeweils in Serie zu ihnen geschalteten Widerständen R2 bis R4 versehen. Die in Richtung auf die Steuereinheit 4 sperrenden Dioden D6 bis D8 sowie die jeweils in Reihe zu ihnen liegenden Widerstände R2 bis R4 sind den Leuchtfeldern 1 bis 3 zugeordnet.

Arbeitet die Steuerung 4 für die Heckleuchte mit den Leuchtfeldern 1 bis 3 ordnungsgemäß, dann erhält die Steuereinheit 4 bei Betätigen der Bremse ein entsprechendes Bremssignal, das über den Bremseingang BR dem Eingang E2 der Steuereinheit 4 zugeführt wird. Die Steuereinheit 4 verarbeitet dieses Bremssignal in seinem Programm. Solange die Steuereinheit ordnungsgemäß arbeitet, erzeugt sie am Signalausgang A1 eine Wechselspannung. Aus diesem Wechselspannungssignal wird mittels der Diode D4, D5 und den Kondensatoren C2, C1 eine Gleichspannung erzeugt, die den Transistor T2 öffnet und einen Strom durch den in Serie zu ihm liegenden Widerstand R1 treibt. Dabei wird die Spannung am Kollektor des Transistors T2 gegen Masse Null gezogen. Dies hat zur Folge, daß der dem Transistor T2 nachgeschaltete Halbleiterschalter T1 gesperrt wird. Gleichzeitig mit dem am Signalausgang A1 erzeugten Wechselspannungssignal werden an den Signalausgängen A2 bis A4 der Steuereinheit 4 Ausgangssignale erzeugt, die über die Strompfade 14 bis 16 den Halbleiterschaltern T3 bis T5 zugeführt werden. Sie steuern die Leuchtfelder 1 bis 3 an. Die Helligkeitssteuerung der Leuchtfelder 1 bis 3 erfolgt über ein pulsweitenmoduliertes Signal.

Sollten die Steuereinheit und/oder der Steuerkreis nicht mehr ordnungsgemäß arbeiten, beispielsweise ausfallen, wird der Notpfad 19 über den Halbleiterschalter T1 geöffnet. Wird beispielsweise das Bremspedal bei ausgefallener Steuerung betätigt, liegt am Signaleingang BR eine Spannung an. Über einen Strompfad 20, in welchem der Widerstand R1 liegt und vom Signaleingang BR zum Halbleiterschalter T1 führt, erhält der Halbleiterschalter T1 über den Widerstand R1 an seinem Gate eine positive Spannung und wird leitend. Der Transistor T2 und die Halbleiterschalter T3 bis T5 sind zu diesem Zeitpunkt wegen des Ausfalls oder der Störung der Steuereinheit 4 und/oder des Steuerkreises gesperrt. Über den geöffneten Halbleiterschalter T1 werden die Leuchtfelder 1 bis 3 über die Dioden D6 bis D8 und die Widerstände R2 bis R4 an die Bezugsmasse Null gelegt. Die Leuchtfelder 1 bis 3 werden mit der notwendigen Spannung bzw. dem notwendigen Strom versorgt und leuchten auf. Die Helligkeit der Leuchtfelder 1 bis 3 wird durch die Größe der Widerstände R2 bis R4 festgelegt.

Mit der beschriebenen Überwachungseinrichtung ist gewährleistet, daß die für die Verkehrssicherheit wesentlichen Funktionsbestandteile der Heckleuchte, das Schlußlicht SL und/oder das Bremslicht BR, auf jeden Fall betätigt werden, auch wenn die Steuerung für die Heckleuchte ausgefallen ist. Solange die Steuereinheit und/oder der Steuerkreis für die Heckleuchte ordnungsgemäß arbeiten, ist der Notpfad 19 geschlossen, da der Halbleiterschalter T1 in der beschriebenen Weise gesperrt wird. Die jeweiligen Leuchtfelder 1 bis 3 werden demgemäß über die Halbleiterschalter T3 bis T5 in der beschriebenen Weise betätigt. Die Steuereinheit 4 erzeugt an ihrem Signalausgang A1 die Wechselspannung, die in die Gleichspannung über den Gleichrichter 18 umgesetzt wird. Im dargestellten Ausführungsbeispiel wird das am Signaleingang BR beim Bremsvorgang anstehende Signal dazu verarbeitet, um am Signalausgang A1 der Steuereinheit 4 die Wechselspannung zu erzeugen. Über den Notpfad 19 sind im Ausführungsbeispiel sämtliche drei Leuchtfelder 1 bis 3 ansprechbar, so daß über diesen Notpfad die gesamte Heckleuchte des Kraftfahrzeuges so betätigt werden kann, als ob die Steuerung für die Heckleuchte nicht ausgefallen wäre. Dadurch wird eine hohe Verkehrssicherheit erreicht.

Das in der Steuereinheit 4 abgelegte Programm ist so gestaltet, daß am Signalausgang A1 der Steuereinheit 4 das Wechselspannungssignal nur dann erzeugt wird, wenn die Steuereinheit 4 und/oder der Steuerkreis ordnungsgemäß arbeiten. Ist hingegen die Steuereinheit und/oder der Steuerkreis defekt, wird beim Betätigen der Bremse des Kraftfahrzeuges an den Signaleingang BR für das Bremslicht eine Spannung gelegt, wodurch der Halbleiterschalter T1 über den Widerstand R1 im Strompfad 20 am Gate eine positive Spannung erhält und dadurch leitend wird. Am Signalausgang A1 der Steuereinheit 4 liegt in diesem Falle keine Wechselspannung, sondern eine konstante Spannung an. Dadurch bleiben der Transistor T2 und die Halbleiterschalter T3 bis T5 gesperrt. Die Folge ist, daß die Leuchtfelder 1 bis 3 über die Strompfade 21 bis 23, in denen die Dioden D6 bis D8 und die Widerstände R2 bis R4 liegen, mit dem notwendigen Strom bzw. der notwendigen Spannung versorgt werden.

## Patentansprüche

1. Überwachungseinrichtung einer Steuerung, vorzugsweise für Signalleuchten von Fahrzeugen, insbesondere von Kraftfahrzeugen, bei der die Signalleuchte wenigstens ein Schlußlicht und ein Bremslicht aufweist, die jeweils mit wenigstens einem Leuchtenelement versehen sind, das an jeweils einen Signaleingang angeschlossen ist,
**dadurch gekennzeichnet, daß** die Überwachungseinrichtung mit wenigstens einem elektronischen Schalter (T1) versehen ist, mit dem ein Notpfad (19) zum Schlußlicht (SL) und/oder zum Bremslicht (BR) bei Störung der Steuerung (4) freischaltbar ist.

2. Überwachungseinrichtung nach Anspruch 1,
**dadurch gekennzeichnet, daß** die Signaleingänge (NSL, BR, SL) der Schlußleuchte (1 bis 3) an Eingänge (E1 bis E3) der Steuerung (4) angeschlossen sind, die Signalausgänge (A2 bis A4) aufweist, an die über elektronische Schaltelemente (T3 bis T5) die Signalleuchte (1 bis 3) angeschlossen ist.

3. Überwachungseinrichtung nach Anspruch 1 oder 2,
**dadurch gekennzeichnet, daß** die Steuerung (4) wenigstens einen weiteren Signalausgang (A1) aufweist, an den der Notpfad (19) angeschlossen ist.

4. Überwachungseinrichtung nach Anspruch 3,
**dadurch gekennzeichnet, daß** am weiteren Signalausgang (A1) der Steuerung (4) ein Schaltsignal anliegt, das bei ordnungsgemäß arbeitender Steuerung (4) zum Schließen des Notpfades (19) herangezogen wird.

5. Überwachungseinrichtung nach Anspruch 4,
**dadurch gekennzeichnet, daß** das Schaltsignal ein Wechselspannungssignal ist.

6. Überwachungseinrichtung nach Anspruch 5,
**dadurch gekennzeichnet, daß** das Wechselspannungssignal durch einen Gleichrichter (18) in ein Gleichspannungssignal umwandelbar ist.

7. Überwachungseinrichtung nach Anspruch 6,
**dadurch gekennzeichnet, daß** dem Gleichrichter (18) ein im Notpfad (19) liegendes elektronisches Schaltelement (T2), vorzugsweise ein Transistor, nachgeschaltet ist, das den elektronischen Schalter (T1) des Notpfades (19) betätigt.

8. Überwachungseinrichtung nach Anspruch 7,
**dadurch gekennzeichnet, daß** das elektronische Schaltelement (T2) in einem Strompfad (20) liegt, der einen der Signaleingänge (BR), vorzugsweise den Signaleingang für das Bremslicht (2), mit dem elektronischen Schalter (T1) unter Umgehung der Steuerung (4) verbindet.

9. Überwachungseinrichtung nach Anspruch 8,
**dadurch gekennzeichnet, daß** im Strompfad (20) ein Widerstand (R1) liegt, der dem elektronischen Schaltelement (T2) im Notpfad (19) nachgeschaltet und dem elektronischen Schalter (T1) des Notpfades (19) vorgeschaltet ist.

10. Überwachungseinrichtung nach einem der Ansprüche 1 bis 9,
**dadurch gekennzeichnet, daß** die elektronischen Schaltelemente (T3 bis T5) für die Signalleuchte (1 bis 3) Halbleiterschalter sind.

11. Überwachungseinrichtung nach einem der Ansprüche 1 bis 10,
**dadurch gekennzeichnet, daß** der elektronische Schalter (T1) des Notpfades (19) Strompfade (21 bis 23) öffnet, die die Signalleuchte (1 bis 3) unter Umgehung der elektronischen Schaltelemente (T3 bis T5) mit dem elektronischen Schalter (T1) des Notpfades (19) verbinden.

12. Überwachungseinrichtung nach einem der Ansprüche 1 bis 11,
**dadurch gekennzeichnet, daß** das Schlußlicht (SL) und/oder das Bremslicht (BR) durch LED-Felder gebildet sind.
